# EUROPEAN PATENT SPECIFICATION

(11) **EP 3 975 689 B1**
(45) Date of publication and mention of the grant of the patent: **01.10.2025**
(21) Application number: 20728230.2
(22) Date of filing: 27.05.2020
(51) Int. Cl.: A01F 15/00, A01F 15/10

(54) **AGRICULTURAL MACHINE**
LANDWIRTSCHAFTLICHE MASCHINE
MACHINE AGRICOLE

(30) Priority: 30.05.2019 IT 201900007614
(43) Date of publication of application: 06.04.2022
(73) Proprietor: Kverneland Group Ravenna S.r.l., 48026 Russi (RA) (IT)
(72) Inventor: VARLEY, Seamus, Dublin 6W (IE)
(74) Representative: Conti, Marco
(86) International application number: PCT/IB2020/055012
(87) International publication number: WO 2020/240427

(56) References cited:
- EP-A1- 2 742 794
- EP-A1- 3 005 854
- US-A1- 2013 316 770
- US-B2- 7 404 284

## Description

### Technical field

This invention relates to an agricultural machine and to a method for operating an agricultural machine.

### Background art

In particular, this disclosure relates to agricultural machines such as round balers, square balers, forage wagons or trailers. These machines typically include a feeding system for collecting crops from a field and feed them to a receiving unit such as a baling chamber; also, these machines include a cutting or chopping unit provided with knives configured to cut the crops advancing through the feeding system.

The knives of these machine need to be sharpened almost on a daily basis. Hence, an operator needs to get access to the knives to perform the sharpening and, more generally, the maintenance of the knives.

In a large part of the known balers, the knives may be accessed by an operator only by entering into the baling chamber and pulling the knives through slots provided in the cutting unit. This operation is uncomfortable and dangerous for the operator.

In some other balers, the cutting unit (including the knives) is slidable out of a side of the machine in an extended position, to allow an operator to get access to the knives. For example, patent document US7404284B2 discloses a baler including a mounting arrangement movable between a raised, operating position, wherein a plurality of knives is located for moving into a plurality of slots of a guide surface, and a lowered position, wherein the plurality of knives is located completely below the guide surface so that they can be moved along a guide rail arrangement and accessed from the above. Also, US7404284B2 discloses a lock arrangement containing a hook attached to the guide surface for retaining a frame coupling said mounting arrangement. The solution of US7404284B2 has several drawbacks. Firstly, the mounting arrangement has to be moved manually between the raised and the lowered position, with great effort of the user, or, alternatively, the machine has to be equipped with a dedicated actuator, leading to excessive complication of the machine. Also, this dedicated actuator should be removed by hand to clear the passage to slide out the knives.

Other examples of balers are provided by patent documents EP2742794A1 and US2013/316770A1.

### Disclosure of the invention

Scope of the present invention is to provide an agricultural machine and a method for operating an agricultural machine that overcomes at least one of the aforementioned drawbacks.

This scope is achieved by the agricultural machine and the method for operating an agricultural machine according to the appended claims.

According to one aspect of the present disclosure, it regards an agricultural machine. The agricultural machine may be one of the following machines: a round baler, a square baler, a forage wagon or trailer, or other machines.

The agricultural machine (also indicated in the following as "machine") comprises a receiver, for receiving crops.

The machine comprises a pick-up device, configured for picking-up the crops from a field.

The machine comprises a feeding system. The feeding system is configured for feeding the crops from the pick-up device to the receiver. The feeding system includes a frame. In an embodiment, the frame is connected to the receiver.

The feeding system includes a feeding channel. The feeding channel has an inlet, for receiving the crops from the pick-up device, and an outlet, opened to the receiver for feeding the crops to the receiver.

The feeding system includes a plurality of knives, for cutting the crops advancing through the feeding channel.

The feeding system includes a drop floor device. The drop floor device is connected to the frame. The drop floor device at least partially defines a bottom side of the feeding channel. The drop floor device includes an upper structure, facing the feeding channel. In particular, the upper structure at least partially defines the bottom side of the feeding channel. The upper structure provides (or defines) apertures.

The drop floor device includes a lower structure. The plurality of knives is mounted on the lower structure. the lower structure is movable with respect to the frame between a raised position, in which the plurality of knives engages the upper structure to project into the feeding channel through the apertures of the upper structure to cut the crops, and a lowered position, in which the plurality of knives is disengaged and spaced apart from the upper structure. In fact, said apertures are shaped so to allow the knives to pass through them.

The feeding system includes an actuator connected to the lower structure of the drop floor device, to move the lower structure between the raised position and the lowered position.

In such a machine, when an operator has to sharpen the knives, he commands the actuator to move the lower structure in the lowered position, so that he can have access to the knives.

In an embodiment, the knives (or the knives unit) are slidable along a transversal direction (perpendicular to the advancement direction of the machine) when the lower structure is in its lowered position, from a retracted position to an extracted position. In the extracted position, the knives project out of a side of the machine.

When he has completed the sharpening, he commands the actuator to move the lower structure in the raised position, so that the knives project through the apertures into the feeding channel.

According to the invention, the feeding system includes a locker, configured to removably lock the upper structure to the frame. According to the invention, the upper structure is at least partially movable with respect to the frame between a locking position and a working position. The upper structure in the locking position is raised with respect to the working position; hence, in the working position of the upper structure, the cross section of the feeding channel is greater than in the locking position (in particular, the feeding channel may be completely obstructed by the upper structure being in the locking position).

The locker is configured to removably lock the upper structure to the frame in the locking position of the upper structure. So, the upper structure may be locked, by means of the locker, while the lower structure is moved, by means of the actuator, so that the movement of lower structure does not cause a movement of the upper structure.

In an embodiment, the lower structure of the drop floor device includes a knives unit and a rocker. Said plurality of knives is mounted on the knives unit. The rocker is movable with respect to the knives unit. The actuator is connected to said rocker in an actuator connection point.

The rocker, being movable with respect to the knives, allows to guide the actuator connection point (and, consequently, the actuator) out of a line of collision with the knives, while moving the lower structure between the raised and the lowered position. This solution is particularly advantageous in a machine wherein an available area for the drop floor device, defined between the pick-up device and the wheel axle, is limited.

It is observed that, in an embodiment, the machine includes both a locker (in the upper structure) and a rocker (in the lower structure); in another embodiment, the machine includes a locker but not a rocker.

According to the invention, the machine is operable in a working configuration, to feed the crops to the receiver through the feeding channel, and in a service configuration, to allow an operator to get access to the plurality of knives to perform maintenance (for instance, sharpen the knives).

According to the invention, in the working configuration of the machine, the lower structure of the drop floor device is in the raised position and, in the service configuration of the machine, the lower structure of the drop floor device is in the lowered position. In an embodiment, in the service configuration, the knives unit is slidable out of a side of the machine (for instance, by means of a carriage provided on the lower structure, wherein the knives are mounted on said carriage).

According to the invention, in the working configuration of the machine, the upper structure of the drop floor device is in the working position (unlocked from the frame) and, in the service configuration of the machine, the upper structure of the drop floor device is in the locking position (locked to the frame through the locker).

The locker is connected to the frame and may be shaped as a hook to engage the upper structure in the locking position of the upper structure.

In an embodiment, the rocker is movable between a first position and a second position, to move the actuator connection point relative to the knives unit. In an embodiment, the actuator connection point is closer from the knives unit in the first position than in the second position.

In an embodiment, the actuator is configured to move the rocker between the first position and the second position in synchronized fashion with moving the lower structure between the raised position and the lowered position.

In an embodiment, in the working configuration of the machine, the rocker is in the first position (closer to the knives unit), and, in the service configuration of the machine, the rocker is in the second position (farther from the knives unit).

According to the invention, the lower structure is pivotable with respect to the frame about a pivoting axis between the raised position and the lower position. The pivoting axis is directed along a transversal direction, perpendicular to an advancement direction of the agricultural machine.

In an embodiment, the actuator has a first end, connected to the lower structure of the drop floor device (in said actuator connection point), and a second end, opposite to the first end, connected to the frame. In an embodiment, the actuator is a cylinder-piston actuator.

In an embodiment, the agricultural machine is a baler connectable to a tractor for providing bales (preferably, round bales); in this embodiment, the baler includes a baling chamber defining said receiver.

In one or more embodiments, the baling chamber includes a first part, for housing a first amount of crops, and a second part, for housing a second amount of crops; the feeding system is movable between a first configuration and a second configuration, wherein, in the first configuration of the feeding system, the feeding channel has a first orientation so that the outlet of the feeding channel is opened to the first part of the baling chamber, and, in the second configuration of the feeding system, the feeding channel has a second orientation different from the first orientation, so that the outlet of the feeding channel is opened to the second part of the baling chamber. In particular, the feeding system further may include a plurality of starter rollers, arranged at the outlet of the feeding channel, and configured to cooperate with the conveying assembly to rotate the first amount of crops and the second amount of crops, and with the feeding channel to feed the crops into the baling chamber, the starter rollers of said plurality being movable in synchronized fashion with the feeding channel, between a first position, in which they at least partially delimit the first part of the baling chamber to rotate the first amount of crops, and a second position, in which they at least partially delimit the second part of the baling chamber, to rotate the second amount of crops, wherein, in the first configuration of the feeding system, the starter rollers of said plurality are in the first position, and, in the second configuration of the feeding system, the starter rollers of said plurality are in the second position. The feeding channel defines in the baling chamber an opening through which the crops are fed to the baling chamber, wherein the starter rollers of said plurality delimit said opening. In an embodiment, the machine includes a conveying assembly configured to transfer the first amount of crops from the first part of the baling chamber to the second part of the baling chamber. The conveying assembly may include one or more belts and/or rollers. So, in these embodiments, the machine is defined by a non-stop baler.

According to one aspect of the present disclosure, it concerns a method for operating an agricultural machine. The method comprises a working step. The working step includes picking-up crops from a field, through a pick-up device. The working step includes advancing the crops, through a feeding channel, from the pick-up device to a receiver. The working step includes cutting the crops advancing through the feeding channel, through a plurality of knives mounted on a drop floor device. The drop floor device at least partially defines a bottom side of the feeding channel. The drop floor device includes an upper structure facing towards the feeding channel and a lower structure; said plurality of knives is mounted on the lower structure.

The method includes a service step. The service step includes moving the lower structure with respect to a frame from a raised position, in which the plurality of knives engages the upper structure to project into the feeding channel through apertures of the upper structure (to cut the crops), to a lowered position, in which the plurality of knives is disengaged and spaced apart from the upper structure. In the service step, the moving of the lower structure between the raised position and the lowered position is performed through an actuator connected to the lower structure of the drop floor device.

According to the invention, the service step includes moving at least partially the upper structure from a working position to a locking position and removably locking the upper structure in the locking position to the frame.

According to the invention, said locking is performed by means of a locker; the locker, for example, is shaped as a hook fixed to the frame and configured to lock the upper structure to the frame.

In an embodiment, the lower structure of the drop floor device includes a knives unit and a rocker, wherein said plurality of knives is mounted on the knives unit and wherein the actuator is connected to the rocker in an actuator connection point. The service step includes moving the rocker from a first position to a second position, so as to move the actuator connection point according to a predefined path; preferably, said moving of the rocker is performed in synchronized fashion with moving the lower structure between the raised position and the lowered position.

In an embodiment, the method includes a cleaning step. In the cleaning step, blocks of crops are removed from the feeding channel. The cleaning step includes moving both the upper structure and the lower structure to the lowered position, to enhance a cross section of the feeding channel. The lower structure is moved to the lowered position by means of the actuator; the upper structure, being unlocked from the frame, is dragged by the movement of the lower structure.

According to the invention, the lower structure is pivoted with respect to the frame about a pivoting axis, between the raised position and the lower position.

It is here observed that the machine and/or the method according to the present description provides several advantages. Firstly, it enables the upper structure to work in tandem with the knives without the upper structure and the knives being physically locked together (in fact, they are compressed together without physical locking for instance by hydraulic actuators; in this situation, the actuator will have full control over the knives movements). Also, it enables the sliding out to one side of the machine of the knives unit without needing to remove the actuator by hand. Moreover, when the knives unit is in the extracted position, the knives is fully exposed so knives can be removed without the need to remove the knives through the apertures of the upper structure. Also, according to one aspect of the present disclosure, it allows to reduce the number of actuators that are needed to operate the raised and lowered position of the lower structure and to working and service configuration of the machine. Furthermore, the present disclosure provides an automatic "hooking" system to lock the upper structure unit in the locking position so the lower unit can separate from the upper structure , followed by the knives unit so the knives unit can slide out to one side of the machine for servicing, without having to move or alter components temporarily by hand for servicing. Generally speaking, the knives unit of the present disclosure can be accessed from outside the machine so that an operator does not have to enter the machines perimeter to access the knives unit or the knives. Therefore, the machine according to the present disclosure enables the sliding out to one side of the machine the knives unit, that is located under the feeding system in a confined space defined between the pick-up device and the machines wheels axle. So, the machine allows maintenance in a fully automatic way; in fact, at least according to one aspect of the present disclosure, when the operator leaves the tractor, the knives unit is ready to slide out without any temporary removal of hydraulic cylinders or any other manual labour involved in preparing the drop floor device and/or the knives unit to slide out to one side of the machine, so the operator just has to slide the cutting unit out (without any delay).

### Brief description of drawings

This and other features of the invention will become more apparent from the following detailed description of a preferred, non-limiting example embodiment of it, with reference to the accompanying drawings, in which:
- figure 1 illustrates an agricultural machine according to the present disclosure in a working configuration, with a feeding channel opened to a first part of the baling chamber;
- figure 2 illustrates the agricultural machine of figure 1 in the working configuration, with a feeding channel opened to a second part of the baling chamber;
- figure 3 illustrates the agricultural machine of figure 1 moving from the working configuration to the service configuration, with the upper structure of a drop floor device in the locking position and the lower structure of the drop floor device being in the raised position;
- figure 4 illustrates the agricultural machine of figure 1 moving from the working configuration to the service configuration, with the upper structure of the drop floor device in the locking position and the lower structure of the drop floor device starting moving from the raised position towards a lowered position;
- figure 5 illustrates the agricultural machine of figure 1 in a collision (undesired) configuration, with the upper structure of a drop floor device in the locking position and the lower structure of the drop floor device in the lowered position, with a rocker in a first position;
- figure 6 illustrates the agricultural machine of figure 1 in a service configuration, with the upper structure of a drop floor device in the locking position and the lower structure of the drop floor device in the lowered position, with the rocker in a second position;
- figure 7 illustrates the agricultural machine of figure 1 in a cleaning configuration, with the upper structure unlocked from the frame and the lower structure in the lowered position;
- figure 8 illustrates the feeding mechanism of the agricultural machine of figure 1;
- figures 9 and 10 illustrate a locker, fixed to a frame of the feeding mechanism of the agricultural machine of figure 1.

### Detailed description of preferred embodiments of the invention

With reference to the accompanying drawings, the numeral 1 denotes an agricultural machine, according to the present disclosure. In particular, the agricultural machine 1 which is illustrated in the accompanying figures is a baler connectable to a tractor for providing round bales.

The machine 1 includes a receiver 2 for receiving crops. In particular, the receiver 2 is defined by a baling chamber. In an embodiment, the receiver 2 includes a first part 21 for housing a first amount of crops, and a second part 22, for housing a second amount of crops. The receiver 2 includes a plurality of rollers 23, delimiting the baling chamber 2 (in particular, delimiting the first part 21 and the second part 22). The plurality of rollers 23 are configured to rotate the crops housed in the baling chamber, to form the bale. In an embodiment, the rollers 23 of said plurality have a fixed position. The receiver 2 comprises lateral walls; the rollers 23 of said plurality may be fixed to the lateral walls of the receiver 2.

The machine 1 may comprise one or more starter rollers 24. The starter rollers 24 are configured to start a rotation of the crops. In an embodiment, the machine 1 comprise a starter rollers frame 10; the starter rollers frame 10 may be fixed or movable; the starter rollers 24 are mounted on said starter rollers frame 10. Hence, the starter rollers 24, in an embodiment, have a fixed position; in another embodiment, the starter rollers 24 are movable with respect to the rollers 23.

The machine 1 comprises a pick-up device 3, configured for picking-up the crops from a field. The pick-up device 3 includes a pick-up roll.

The machine 1 comprises a feeding system 4.

The feeding system 4 is configured to guide the crops from the pick-up device 3 to the receiver 2. The feeding system 4 includes a pushing rotor 47, rotatable about a rotation axis A. The feeding system 4 includes a feeding channel 42. The feeding channel 42 extends between an inlet 42A and an outlet 42B. The inlet 42A faces the pick-up device 3. The outlet 42B defines an opening in the receiver 2. The pushing rotor 47 is positioned along the feeding channel 42, downstream of the inlet 42A and upstream of the outlet 42B.

The feeding system 4 includes a frame 41. The frame 41 defines a (portion of) a top side of the feeding channel 42. The frame 41 is connected to the pushing rotor 47. In an embodiment, the pushing rotor 47 and the frame 41 are separately rotatable about the rotation axis A. In particular, the pushing rotor 47 is rotatable about the rotation axis A to advance the crops through the feeding channel 42. The frame 41 is movable, by rotating about the rotation axis A, between a first position and a second position. In the first position of the frame 41, the feeding channel 42 has a first orientation, so that the outlet 42B of the feeding channel 42 is opened to the first part 21 of the receiver 2 (namely, of the baling chamber). In the second position of the frame 41, the feeding channel 42 has a second orientation, so that the outlet 42B of the feeding channel 42 is opened to the second part 22 of the receiver 2 (namely, of the baling chamber).

The feeding system 4 includes a drop floor device 44, defining a (portion of) a bottom side of the feeding channel 42. The drop floor device 44 is positioned between the inlet 42A and the outlet 42B of the feeding channel 42. The pushing rotor 47 is positioned above said drop floor device 44. The feeding system 4 includes a plurality of knives 43, for cutting the crops advancing through the feeding channel 42. The plurality of knives 43 project into the feeding channel 42 from the drop floor device 44.

The drop floor device 44 includes an upper structure 441 and a lower structure 442. The upper structure 441 faces the feeding channel 42. The upper structure 441 provides apertures (or slots). The lower structure 442 is located below the upper structure 441. The plurality of knives 43 are mounted on the lower structure 442. The plurality of knives passes through the apertures of the upper structure 441 to project into the feeding channel 42 (at least in a position of the drop floor device 44). In a preferred embodiment, the lower structure 442 is movable with respect to the frame 41 between a raised position, in which the plurality of knives 43 engages the upper structure 441 to project into the feeding channel 43 through the apertures of the upper structure 441 to cut the crops, and a lowered position, in which the plurality of knives 43 is disengaged and spaced apart from the upper structure 441. In particular, the lower structure 442 is pivotable about a pivoting axis P between the raised and the lowered position. The pivoting axis P is perpendicular to an advancement direction of the machine 1. The lower structure 442 is pivotable about the pivoting axis P separately from the upper structure 441. Hence, while the lower structure 442 moves between the lowered and the raised position, the upper structure 441 may remain stationary.

In an embodiment, also the upper structure 441 is movable (pivotable) between a raised position and a lowered position. In particular, the machine 1 is operable in a cleaning configuration, to remove blocks of crops from the feeding channel 42, wherein in the cleaning configuration both the upper structure 441 and the lower structure 442 are in their respective lowered position. Hence, in the cleaning configuration, a cross section of the feeding channel 42 is enhanced, to allow blocks of crops to pass though the channel 42.

The feeding system 4 includes an actuator 45 (or, preferably, a pair of actuators 45). The actuator 45 (or, each actuator 45 of said pair) has a first end 45A connected to the lower structure 442 in an actuator connection point C1 and a second end 45B connected to the frame 41. The actuator 45 includes a cylinder and a piston. The actuator 45 is configured to actuate a pivoting of the lower structure 442 about the pivoting axis P.

The lower structure 442 includes a knives unit 442A and a rocker 442B. The knives unit 442A is connected to the upper structure 441 in the pivoting axis P. The rocker 442B is connected to the knives unit 442A. The knives unit 442A is elongated between a first end and a second end; the pivoting axis P is located at the first end and the rocker 442B is connected to the knives unit 442A at the second end. In particular, the rocker 442B is rotatable with respect to the knives unit 442A about a rotation axis 4420B, through a rocker actuator 4421B. The rotation axis 4420B is parallel to the pivoting axis P. The rocker actuator 4421B (preferably including a cylinder-piston) has a first end connected to the knives unit 442A and a second end connected to the rocker 442B. Through the rocker actuator 4421B, the rocker 442B is movable relative to the knives unit 442A between a first position and a second position.

In particular, the rocker 442B is U-shaped, having a first end connected to the rocker actuator 4421B and a second end connected to the first end 45A of the actuator 45, in the actuator connection point C1. In the first position of the rocker 442B, the actuator connection point C1 is closer to the knives unit 442A than in the second position. The machine 1 includes a wheel axle 5. In the second position of the rocker 442B, the actuator connection point C1 is closer to the wheel axle 5 than in the first position.

The machine 1 is operable in a working configuration. In the working configuration of the machine 1, the lower structure 442 is in the raised position. In the working configuration of the machine 1, the rocker (442B) is in the first position. In an embodiment (wherein the upper structure 441 is also movable between its raised and lowered position), in the working configuration of the machine 1, the upper structure 441 is in the raised position.

The machine 1 is operable in a service configuration. In the service configuration of the machine 1, the lower structure 442 is in the lowered position. In the service configuration of the machine 1, the rocker (442B) is in the second position. In an embodiment (wherein the upper structure 441 is also movable between its raised and lowered position), in the working configuration of the machine 1, the upper structure 441 is in the raised position.

The machine 1 has a control unit configured to synchronizingly move the actuator 45 and the rocker actuator 4421B. In particular, while the lower structure 442 moves, by means of the actuator 45, from the raised position to the lowered position, the rocker 442B moves, by means of the rocker actuator 4420B, from the first position to the second position. In such a way, the movement of rocker 442B avoids interference of the actuator 45 with the knives 43. In fact, the actuator 45 is moved by the rocker 442B out of a line of collision with the knives 43.

In an embodiment wherein an available space between the pick-up device 3 and the wheel axle 5 is limited (such as in the baler illustrated in the accompanying figures), if the rocker 442B did not move from the first position to the second position while the lower structure 442 of the drop floor device 44 moves towards the lowered position, the machine 1 would go to a collision configuration, wherein the knives 43 hit the actuator 45; the collision configuration is undesired since it causes damages of the knives 43 and/or of the actuator 45. In other embodiments (not illustrated), the rocker 442B movement is not essential, since an available space for the drop floor device 4 is sufficient to attach the actuator 45 in an actuator connection point C1 far enough from the knives 43.

In an embodiment, the upper structure 441 is movable at least between a locking position and a working position. In the working position, the upper structure 441 defines a bottom side of the feeding channel 42. In the locking position, the upper structure 441 is locked to the frame 41.

In an embodiment wherein the machine 1 is operable in a cleaning configuration to remove blocks of crops from the feeding channel 42, the raised position of the upper structure 441 defines the working position, and the upper structure 441 is further movable to a lowered configuration.

The upper structure 441 includes a first part 441A and a second part 441B (also called deflector). The first part 441A is connected to the lower structure 442 (in particular, to the knives unit 442A) in the pivoting axis P. The second part 441B is movable with respect to the first part 441A. In particular, the second part 441B is rotatable with respect to the first part 441A about a rotation axis 4410B. The rotation axis 4410B is at the connection between the first part 441A and the second part 441B.

In particular, in an embodiment wherein the receiver 2 includes a first part 21 and a second part 22, the upper structure 441 has a first working position and a second working position, wherein in the first working position the feeding channel 42 has the first orientation and in the second working position the feeding channel 42 has the second orientation. In the first working position, the first part 442A of the upper structure 442 has the same position as in the second working position, while the second part 442B is rotated about the rotation axis 4410B from the first working position to the second working position. In the working configuration of the machine, the upper structure 441 may be in the first working position or in the second working position (depending on the crops being fed to the first or second part of the baling chamber).

In the working position (or at least in the first working position), the first part 441A and the second part 441B of the upper structure 441 substantially have the same orientation.

The feeding system 4 includes a locker 46. The locker 46 is mounted on the frame 41. The locker 46 is shaped as a hook, to engage the upper structure 441 (in particular, the second part 441B of the upper structure) in the locking position.

The frame 41 is rotatable about the rotation axis A to move the locker 46 between a rest position, in which it does not interfere with the feeding channel 42 (having the first orientation), and an active position, in which it can engage and lock the upper structure 441.

Hence, in the working configuration of the machine 1, the upper structure 441 is unlocked from the locker 46. Hence, in the working configuration of the machine 1, the upper structure 441 is in the working position (first or second).

In the service configuration of the machine 1, the upper structure 441 is in the locking position, wherein the second part 441B is locked to the frame 41 by the locker 46.

Both in the working position and in the locking position, the upper structure 441 is raised; while in the cleaning configuration to remove blockages, the upper structure 441 is lowered.

Therefore, when the machine 1 moves from the working configuration to the service configuration, the upper structure 441 is locked to the clocker 46 to remain in the raised position, while the lower structure 442 is lowered down, pushed by the actuator 45. In such a way, a gap is created between the upper structure 441 and the lower structure 442, which allows the operator to have access to the knives 43, and/or to slide out of a side of the machine the knives unit 442A. Conversely, in the working configuration, the upper structure 441 and the lower structure 442 are tight together so that the knives pass through the apertures of the upper structure 441.

The movement of the upper structure 441 from the working position to the locking position is performed by moving the second part 441B of the upper structure 441 close to the locker 46; said movement may be performed by a dedicated actuator, or manually by the operator.

The feeding system 4 may further include a scarper unit 48, connected (preferably fixed) to the frame 41. The scraper unit 48 is configured to scrape the crops advancing through the feeding channel 42. In an embodiment, the scraper unit is rotatable about the rotation axis A.

In the following, a description of exemplary embodiments of the machine 1 is provided. According to one aspect of the disclosure, the machine 1 is a baler. The baler is configured for processing a crop type material into bales, the pickup device 3 gathers the crop from the ground, the feeding system 4 feeds the crops through the feeding channel 42 that may or may not be provided with cutting knives 43, the pushing rotor feeds the crops into a baling chamber 2. There is provided a drop floor device 44 and knives unit 442A that may be separated by locking the upper structure 441 of the drop floor device 44 in the upper (raised) position so the knives unit 442A may be lowered down for servicing enabling the sliding out of the knives unit 442A. The drop floor device 44 has a means attached to the frame 41 to enable the temporary locking of the upper structure 441 of the drop floor device 44 to the frame 41, or to the scraper unit 48.

According to one aspect of the disclosure, the machine 1 is a nonstop baler. There is provided a pickup mechanism 3 for picking up crop material to feed to the pushing rotor 47 and in turn feed the crop through the drop floor device 4 and/or the cutting knives 43, to feed the crop into the baling chamber with bottom starter rollers 24. The frame 41 and the scraper unit 48 provides a top part of the feeding channel 42 while the second part 441B of the upper structure 441 (also called deflector or deflector plate) provides the bottom part of the feeding channel 42. The rotation of both the scraper unit 48 and the second part 441B of the upper structure 441 can provide crop feeding into the first part 21 of the baling chamber (also called pre-chamber) and/or into the second part 22 of the baling chamber (also called main chamber), while the machine is in the working configuration. The scraper unit 48 configures into a down position and the deflector 441B configures to an up position to meet and engage with the locker 46 attached to and part of the scraper

According to an aspect of the disclosure, the drop floor device 44 is provided with said crop deflector plate; and the deflector plate 441B is used to provide a temporary locking of the upper structure 441 of the drop floor device 44 to lock onto the scraper unit 48 by providing an automatic movement of the deflector plate 441B to move close to the frame 41 and temporarily lock onto the frame 41, so the knives unit 442A can separate from the upper structure 441 of the drop floor device 44, so to make possible the sliding out of the knives unit 442A.

According to another aspect of the disclosure, while the lower structure 442 is lowered to its lowered position, the rocker 442B pivot in a generally backward direction about axis 4420B and move the hydraulic cylinder 45 (in an embodiment, with further rotation of the actuator 45 at connection point C2), in order to move the cylinder 45 in a generally backwards direction, to enable the knives 43 to slide and pass unimpeded by hydraulic actuator 45, so as to avoid the collision with the actuator 45.

In another aspect of the disclosure, the dimensions of a zone between the pick-up device 3 and the wheel axle 5 are limited; hence, while the actuator 45 moves the lower structure 442 in a generally up and down movement within the confinement of said zone, the rocker 442B enables automatic realignment of the actuator 45 to enable the knives unit to slide out unimpeded to the side of the machine. by providing a suspension type rocking motion.

In another aspect of the invention the floor unit is locked in the upper position by a locking means followed by the lowering of the cutting unit 124 by the hydraulic cylinder / actuator until the cutting unit 124 and the lower structure are blocked at a predefined location by stopping means (the lower structure blocks on pivot point) following further extension of the hydraulic cylinder / actuator resulting with rocker moving away from the frame to realign the hydraulic cylinder / actuator to alignment so the pathway for the cutting unit is free to slide out to one side of the machine In another aspect of the disclosure the lower structure 442 is pivoted around the pivoting axis P and the deflector is rotated about the rotation axis 4410 to an upper position. The locker 46 locks the deflector in the upper position and the lower structure 442 is lowered by the actuator 45 until the under carrying frame stops and blocks.

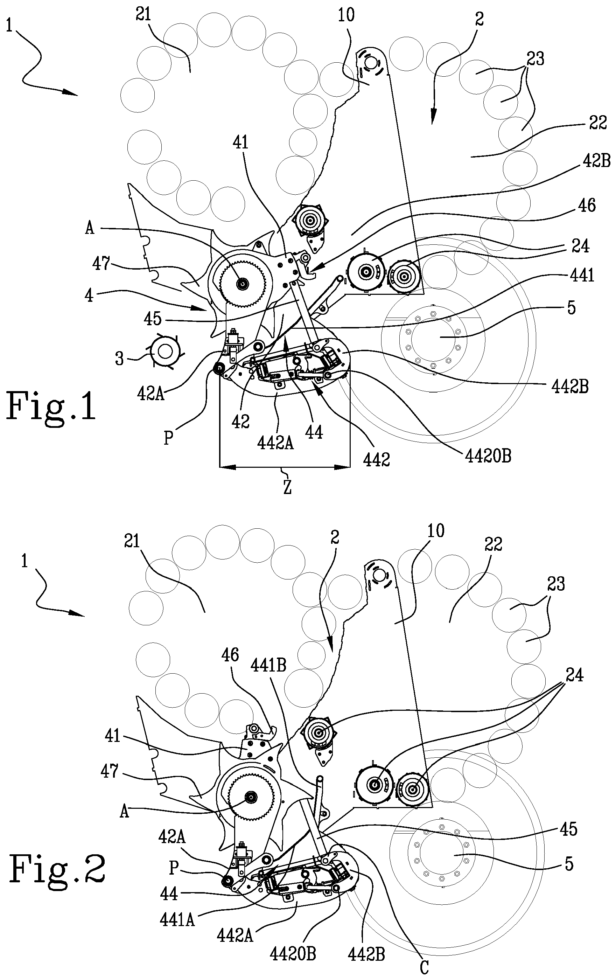

Figure 1 illustrates an exemplary embodiment of a round baling machine of a non-stop type with a first part 21 of the baling chamber (also called pre-chamber) in an upper front part of the machine 1 and a second part 22 of the baling chamber (also called main chamber) at the back of the machine 1. The machine is in working configuration, with the upper structure 441 and the lower structure 442 of the drop floor device 44 in the raised position, defining a feeding channel 42 for crops to be fed into the main chamber. The upper structure 441 and the lower structure 442 of the drop floor device 44 are closed and joined together in the working configuration.

Figure 2 illustrates an exemplary embodiment of the round baling machine in a working configuration, wherein the upper structure 441 and the lower structure 442 of the drop floor device 44 are joined together. Crop is fed into the prechamber through the feeding channel 42, the deflector and the frame 41 are both in the up position for the guiding of the crop into the prechamber. The locker 46 attached to the frame 41 is also in the rotated-up position away from the deflector plate.

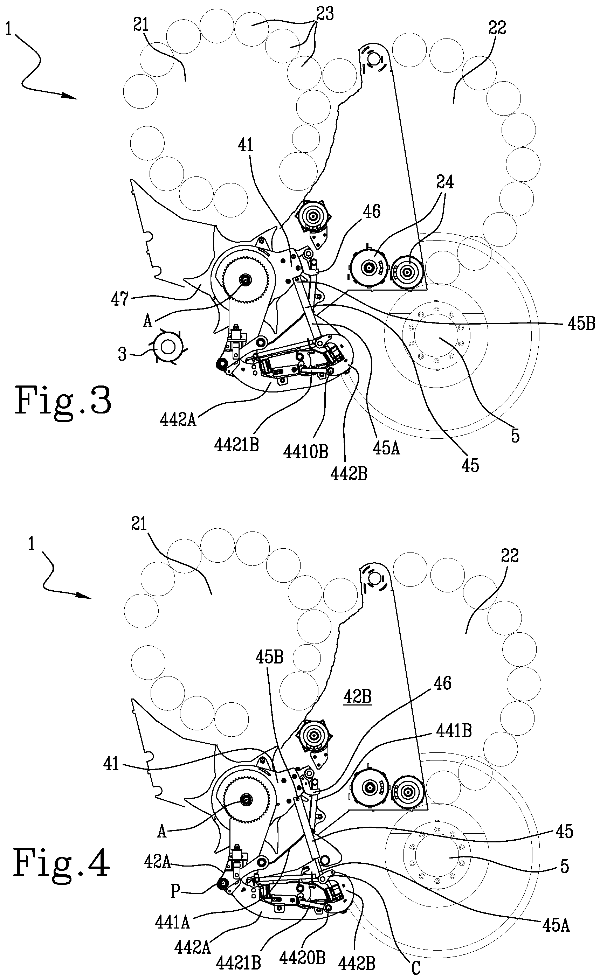

Figure 3 illustrates an exemplary embodiment of the round baling machine in the service configuration. The upper structure 441 of the drop-floor device 44 is in the locking up, through deflector being locked by the locker 46.

Figure 4 illustrates an exemplary embodiment of the round baling machine with the upper structure 441 of the drop-floor device 44 in the locking position and the knives unit 442A being lowered by the hydraulic cylinder actuator 45 through pivoting the lower structure 442 around the pivoting axis P.

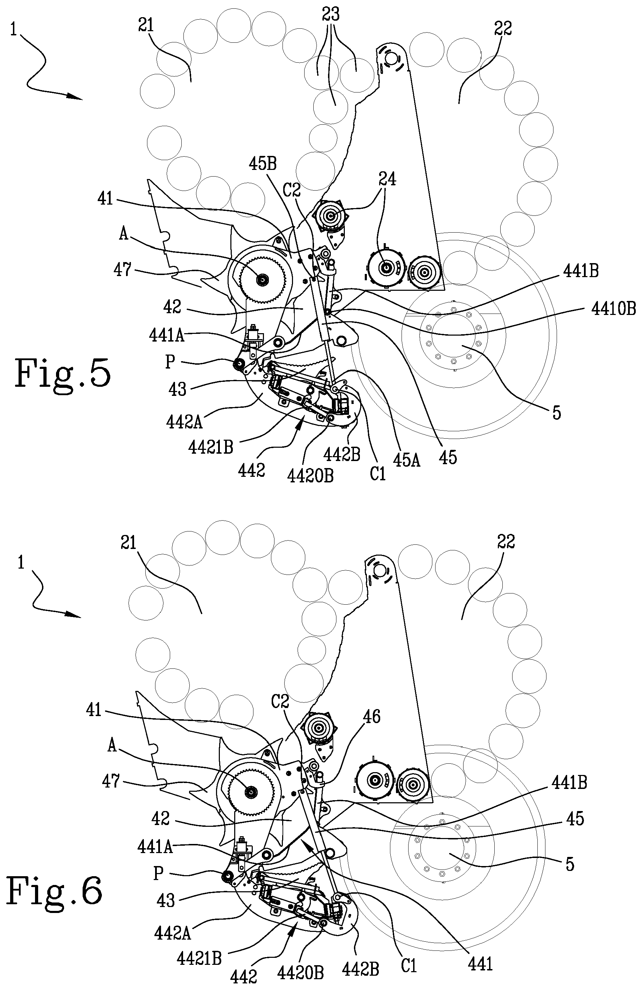

Figure 5 illustrates an exemplary embodiment of the round baling machine in an undesired collision configuration, with the upper structure 441 in the upper locking position and the lower structure 442 at the lowest point of its rotation, wherein the lower structure 442 is blocked from going lower.

Figure 6 illustrates an exemplary embodiment of the round baling machine in the service configuration, wherein the upper structure 441 is in the upper locking position and the lower structure 442 is at the lowest point of its rotation and the lower structure 442 is blocked from going lower by the shape of the pivot axis P structure. The hydraulic cylinder actuator 45 pushes the rocker 442B away from blocking a pathway of sliding out of the knives unit 442A. In this configuration the knives unit 442A is free of any obstacles to slide out for the user to gain easy access to the knives 43

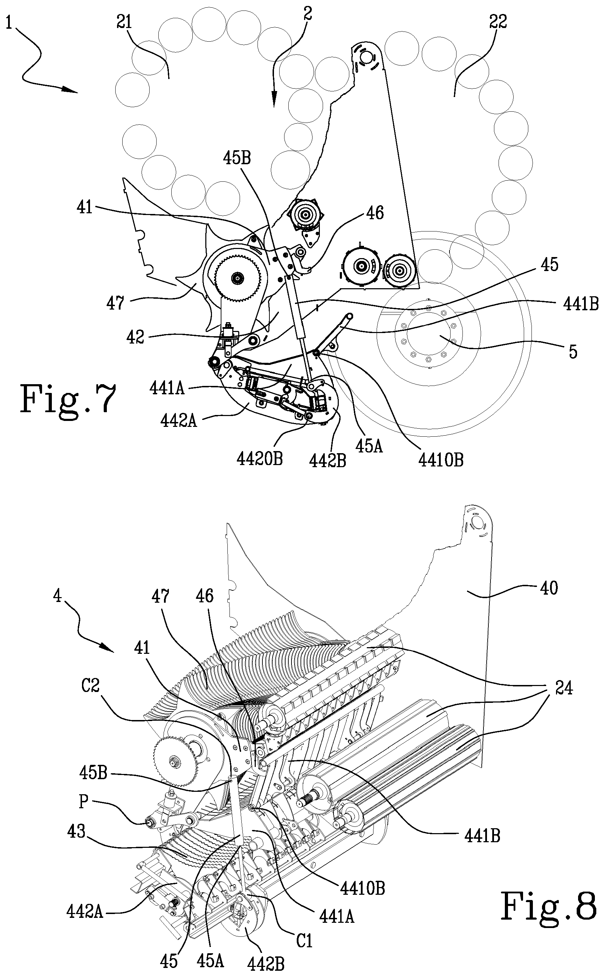

Figure 7 illustrates an exemplary embodiment of the round baling machine in the cleaning configuration, with the upper structure 441 and the lower structure 442 joined together in the lowered position, in order to clear a blockage of crop in the feeding channel 42. The upper structure 441 and the lower structure 442 being lowered by the actuator 45 enables the pushing rotor 47 to commence working again to push the blockage of crop through into either the pre-chamber or the main chamber (depending on the chamber in use at the time of the blockage).

Figure 8 illustrates the feeding system 4 during the sliding out process of the knives unit 442A. The knives 43 are able to pass the actuator 45 without collision due to the realignment of the actuator 45 provided by the rocker 442B, pivoting around the pivoting axis 4420B.

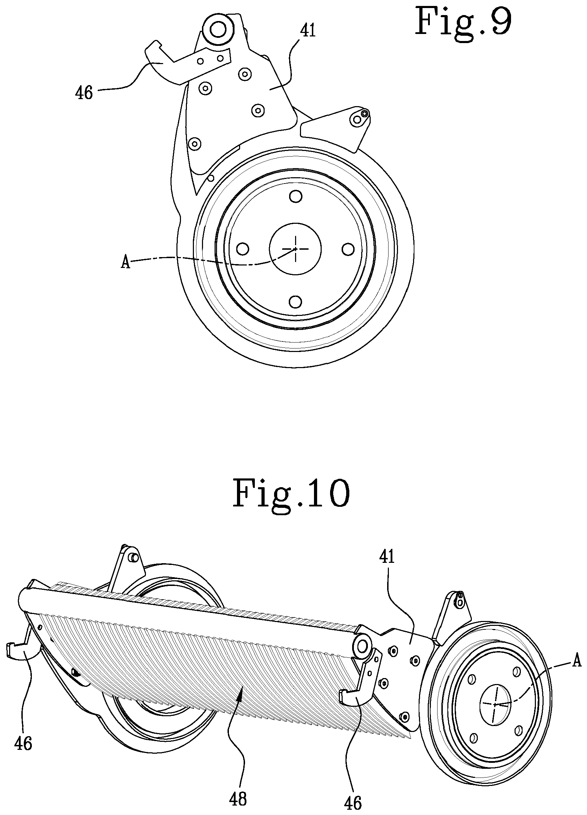

Figures 9 and 10 illustrate the individual parts responsible for the locking of the drop floor device 44 in order for the knives unit to separate from the upper structure 441. The locker 46 is shown attached to the side of the frame 41. The locker 46 may rotate by means of a hydraulic cylinder to push or rotate the scraper unit 48 to feed crop into the pre-chamber or into the main chamber.

## Claims

1. An agricultural machine (1), comprising:
- a receiver (2), configured for receiving crops;
- a pick-up device (3), configured for picking-up the crops from a field;
- a feeding system (4), including
a frame (41);
a feeding channel (42), having an inlet (42A), for receiving the crops from the pick-up device (3), and an outlet (42B), opened to the receiver (2) for feeding the crops to the receiver (2);
a plurality of knives (43), configured for cutting the crops advancing through the feeding channel (42),
a drop floor device (44), which is connected to the frame (41) to define at least partially a bottom side of the feeding channel (42) and includes an upper structure (441), facing the feeding channel (42) and providing apertures, and a lower structure (442), the plurality of knives (43) being mounted on the lower structure (442), wherein the lower structure is movable with respect to the frame (41) between a raised position, in which the plurality of knives (43) engages the upper structure (441) to project into the feeding channel (43) through the apertures of the upper structure (441) to cut the crops, and a lowered position, in which the plurality of knives (43) is disengaged and spaced apart from the upper structure (441),
wherein, the feeding system (4) includes an actuator (45) connected to the lower structure (442) of the drop floor device (44), to move the lower structure (442) between the raised position and the lowered position,
and wherein the upper structure (441) is at least partially movable with respect to the frame between a locking position and a working position, wherein the feeding system (4) includes a locker (46), configured to removably lock the upper structure (441) to the frame (41), in the locking position of the upper structure (441),
wherein the lower structure (442) is pivotable with respect to the frame (41) about a pivoting axis (P), between the raised position and the lower position, the pivoting axis (P) being directed along a transversal direction, perpendicular to an advancement direction of the agricultural machine (1), wherein the agricultural machine (1), is operable in a working configuration, to feed the crops to the receiver (2) through the feeding channel (42), and in a service configuration, to allow an operator to get access to the plurality of knives (43) to perform maintenance, wherein, in the working configuration:
- the lower structure (442) of the drop floor device (44) is in the raised position,
- the upper structure (441) of the drop floor device (44) is in the working position;
and, in the service configuration:
- the lower structure (442) of the drop floor device (44) is in the lowered position,
- the upper structure (441) of the drop floor device (44) is in the locking position,
the agricultural machine (1) being **characterised in that** the locker (46) is connected to the frame (41) and is configured to be engaged with the upper structure (441) in the locking position, and wherein the frame (41) is rotatable about a rotation axis (A) to move the locker (46) between a rest position, in which the locker does not interfere with the feeding channel (42), and an active position, in which the locker can engage and lock the upper structure (441).

2. The agricultural machine (1) of claim 1, wherein the locker (46) is shaped as a hook.

3. The agricultural machine (1) of claim 1 or 2, wherein the lower structure (442) of the drop floor device (44) includes a knives unit (442A) and a rocker (442B), said plurality of knives (43) being mounted on the knives unit (442A), wherein the rocker (442B) is movable with respect to the knives unit (442A).

4. The agricultural machine (1) of any of claim 3, wherein the actuator (45) is connected to said rocker (442B) in an actuator connection point (C1).

5. The agricultural machine (1) of claim 4, wherein the rocker (442B) is movable between a first position and a second position, to move the actuator connection point (C1) relative to the knives unit (442A).

6. The agricultural machine (1) of claim 5, wherein the actuator (45) is configured to move the rocker (442B) between the first position and the second position in synchronized fashion with moving the lower structure (442) between the raised position and the lowered position.

7. The agricultural machine (1) of any of the previous claims from 3 to 6, wherein, in the working configuration of the agricultural machine (1):
- the lower structure (442) of the drop floor device (44) is in the raised position,
- the rocker (442B) is in the first position,
and, in the service configuration of the agricultural machine (1):
- the lower structure (442) of the drop floor device (44) is in the lowered position,
- the rocker (442B) is in the second position,
wherein the actuator (45) is connected to said rocker (442B) in an actuator connection point (C1), and wherein, in the second position of the rocker (442B), the actuator connection point (C1) is at a larger distance from the knives unit (442A) than in the first position of the rocker (442B).

8. The agricultural machine (1) of any of the previous claims, wherein the actuator (45) has a first end (45A), connected to the lower structure (442) of the drop floor device (44), and a second end (45B), opposite to the first end (45A), connected to the frame (41).

9. The agricultural machine (1) of any of the previous claims, said agricultural machine (1) being a baler connectable to a tractor for providing bales, wherein the baler includes a baling chamber defining said receiver (2).

10. The agricultural machine (1) of claim 9, wherein the baling chamber includes a first part (21), for housing a first amount of crops, and a second part (22), for housing a second amount of crops, wherein the feeding system (4) is movable between a first configuration and a second configuration, wherein, in the first configuration of the feeding system (4), the feeding channel (42) has a first orientation so that the outlet (42B) of the feeding channel (42) is opened to the first part (21) of the baling chamber, and, in the second configuration of the feeding system (4), the feeding channel (42) has a second orientation different from the first orientation, so that the outlet (42B) of the feeding channel (42) is opened to the second part (22) of the baling chamber.

11. A method for operating an agricultural machine, comprising:
- a working step, including:
picking-up crops from a field, through a pick-up device (3),
advancing the crops, through a feeding channel (42), from the pick-up device (3) to a receiver (2),
cutting the crops advancing through the feeding channel (42), through a plurality of knives (43) mounted on a drop floor device (44), at least partially defining a bottom side of the feeding channel (42),
wherein the drop floor device (44) includes an upper structure (441) facing towards the feeding channel (42) and a lower structure (442), wherein said plurality of knives (43) is mounted on the lower structure (442);
- a service step, including moving the lower structure (442) with respect to a frame (41) from a raised position, in which the plurality of knives (43) engages the upper structure (441) to project into the feeding channel (42) through apertures of the upper structure (441) to cut the crops, to a lowered position, in which the plurality of knives (43) is disengaged and spaced apart from the upper structure (441),
**characterized in that**, in the service step, the moving of the lower structure (442) between the raised position and the lowered position is performed through an actuator (45) connected to the lower structure (442) of the drop floor device (44), wherein the service step includes moving at least partially the upper structure (441) from a working position to a locking position and removably locking to the frame (41) the upper structure (441) in the locking position, and
wherein the lower structure (442) is pivoted with respect to the frame (41) about a pivoting axis (P), between the raised position and the lower position, the pivoting axis (P) being directed along a transversal direction, perpendicular to an advancement direction of the agricultural machine (1), wherein the agricultural machine (1) is operated in a working configuration, wherein the crops are fed to the receiver (2) through the feeding channel (42), and in a service configuration, wherein an operator has access to the plurality of knives (43) to perform maintenance, and
wherein,
in the working configuration, the lower structure (442) of the drop floor device (44) is in the raised position and the upper structure (441) of the drop floor device (44) is in the working position;
and, in the service configuration, the lower structure (442) of the drop floor device (44) is in the lowered position, and the upper structure (441) of the drop floor device (44) is in the locking position,
wherein the locker (46) is connected to the frame (41) and is engaged with the upper structure (441) in the locking position, and wherein the frame (41) is rotatable about a rotation axis (A) to move the locker (46) between a rest position, in which the locker does not interfere with the feeding channel (42), and an active position, in which the locker can engage and lock the upper structure (441).

12. The method of claim 11, wherein the locker (46) is connected to the frame (41) and is shaped as a hook to engage the upper structure (441) in the locking position.

13. The method of claim 11 or claim 12, wherein the lower structure (442) of the drop floor device (44) includes a knives unit (442A) and a rocker (442B), wherein said plurality of knives (43) is mounted on the knives unit (442A).

14. The method of claim 13, wherein the rocker (442B) moves with respect to the knives unit (442A).

15. The method of claim 13 or of claim 14, wherein the actuator (45) is connected to the rocker (442B) in an actuator connection point (C1), and wherein the service step includes moving the rocker (442B) from a first position to a second position, so as to move the actuator connection point (C1) according to a predefined path, in synchronized fashion with moving the lower structure (442) between the raised position and the lowered position.

## Patentansprüche

1. Landwirtschaftliche Maschine (1), umfassend:
- einen Sammelbehälter (2), der ausgelegt ist, um Erntegut zu sammeln;
- eine Aufnahmevorrichtung (3), die ausgelegt ist, um das Erntegut von einem Feld aufzunehmen;
- ein Zuführungssystem (4), einschließend einen Rahmen (41);
einen Zuführungskanal (42), aufweisend einen Einlass (42A) zum Sammeln des Ernteguts von der Aufnahmevorrichtung (3) und einen Auslass (42B), der zum Sammelbehälter (2) hin geöffnet ist, um dem Sammelbehälter (2) das Erntegut zuzuführen;
eine Vielzahl von Messern (43), die ausgelegt sind, um das Erntegut, das durch den Zuführungskanal (42) vorgeschoben wird, zu schneiden,
eine absenkbare Bodenvorrichtung (44), die mit dem Rahmen (41) verbunden ist, um zumindest teilweise eine Unterseite des Zuführungskanals (42) zu definieren, und die eine obere Struktur (441) einschließt, die dem Zuführungskanal (42) zugewandt ist und Öffnungen bereitstellt, sowie eine untere Struktur (442), wobei die Vielzahl von Messern (43) auf der unteren Struktur (442) montiert ist, wobei die untere Struktur in Bezug auf den Rahmen (41) zwischen einer angehobenen Position, in der die Vielzahl von Messern (43) mit der oberen Struktur (441) im Eingriff ist, um in den Zuführungskanal (43) durch die Öffnungen der oberen Struktur (441) hineinzuragen, um das Erntegut zu schneiden, und einer abgesenkten Position, in der die Vielzahl von Messern (43) von der oberen Struktur (441) gelöst und beabstandet ist, bewegbar ist,
wobei das Zuführungssystem (4) einen Aktuator (45) einschließt, der mit der unteren Struktur (442) der absenkbaren Bodenvorrichtung (44) verbunden ist, um die untere Struktur (442) zwischen der angehobenen Position und der abgesenkten Position zu bewegen,
und wobei die obere Struktur (441) zumindest teilweise in Bezug auf den Rahmen zwischen einer Sperrposition und einer Arbeitsposition bewegbar ist, wobei das Zuführungssystem (4) eine Sperreinrichtung (46) einschließt, die ausgelegt ist, um die obere Struktur (441) in der Sperrposition der oberen Struktur (441) entfernbar an dem Rahmen (41) zu sperren,
wobei die untere Struktur (442) in Bezug auf den Rahmen (41) um eine Schwenkachse (P) zwischen der angehobenen Position und der abgesenkten Position schwenkbar ist, wobei die Schwenkachse (P) entlang einer Querrichtung senkrecht zu einer Vorschubrichtung der landwirtschaftlichen Maschine (1) gerichtet ist,
wobei die landwirtschaftliche Maschine (1) in einer Arbeitsauslegung, um das Erntegut dem Sammelbehälter (2) durch den Zuführungskanal (42) zuzuführen, und in einer Serviceauslegung, um einem Bediener zu erlauben, zu der Vielzahl von Messern (43) zu gelangen, um Instandhaltungsmaßnahmen durchzuführen, bedienbar ist,
wobei in der Arbeitsauslegung:
- sich die untere Struktur (442) der absenkbaren Bodenvorrichtung (44) in der angehobenen Position befindet,
- sich die obere Struktur (441) der absenkbaren Bodenvorrichtung (44) in der Arbeitsposition befindet;
und in der Serviceauslegung:
- sich die untere Struktur (442) der absenkbaren Bodenvorrichtung (44) in der abgesenkten Position befindet,
- sich die obere Struktur (441) der absenkbaren Bodenvorrichtung (44) in der Sperrposition befindet,
wobei die landwirtschaftliche Maschine (1) **dadurch gekennzeichnet ist, dass** die Sperreinrichtung (46) mit dem Rahmen (41) verbunden und ausgelegt ist, um mit der oberen Struktur (441) in der Sperrposition in Eingriff zu gelangen, und wobei der Rahmen (41) um eine Rotationsachse (A) drehbar ist, um die Sperreinrichtung (46) zwischen einer Ruheposition, in der die Sperreinrichtung nicht mit dem Zuführungskanal (42) interferiert, und einer aktiven Position, in der die Sperreinrichtung mit der oberen Struktur (441) in Eingriff gelangen und diese sperren kann, zu bewegen.

2. Landwirtschaftliche Maschine (1) nach Anspruch 1, wobei die Sperreinrichtung (46) als Haken ausgeformt ist.

3. Landwirtschaftliche Maschine (1) nach Anspruch 1 oder 2, wobei die untere Struktur (442) der absenkbaren Bodenvorrichtung (44) eine Messereinheit (442A) und einen Kipphebel (442B) einschließt, wobei die Vielzahl von Messern (43) auf der Messereinheit (442A) montiert ist, wobei der Kipphebel (442B) in Bezug auf die Messereinheit (442A) bewegbar ist.

4. Landwirtschaftliche Maschine (1) nach Anspruch 3, wobei der Aktuator (45) mit dem Kipphebel (442B) in einem Aktuatorverbindungspunkt (C1) verbunden ist.

5. Landwirtschaftliche Maschine (1) nach Anspruch 4, wobei der Kipphebel (442B) zwischen einer ersten Position und einer zweiten Position bewegbar ist, um den Aktuatorverbindungspunkt (C1) relativ zu der Messereinheit (442A) zu bewegen.

6. Landwirtschaftliche Maschine (1) nach Anspruch 5, wobei der Aktuator (45) ausgelegt ist, um den Kipphebel (442B) zwischen der ersten Position und der zweiten Position auf synchronisierte Weise mit dem Bewegen der unteren Struktur (442) zwischen der angehobenen Position und der abgesenkten Position zu bewegen.

7. Landwirtschaftliche Maschine (1) nach einem der vorhergehenden Ansprüche 3 bis 6, wobei in der Arbeitsauslegung der landwirtschaftlichen Maschine (1):
- sich die untere Struktur (442) der absenkbaren Bodenvorrichtung (44) in der angehobenen Position befindet,
- sich der Kipphebel (442B) in der ersten Position befindet,
und in der Serviceauslegung der landwirtschaftlichen Maschine (1):
- sich die untere Struktur (442) der absenkbaren Bodenvorrichtung (44) in der abgesenkten Position befindet,
- sich der Kipphebel (442B) in der zweiten Position befindet,
wobei der Aktuator (45) mit dem Kipphebel (442B) in einem Aktuatorverbindungspunkt (C1) verbunden ist, und wobei sich der Aktuatorverbindungspunkt (C1) in der zweiten Position des Kipphebels (442B) in einem größeren Abstand von der Messereinheit (442A) als in der ersten Position des Kipphebels (442B) befindet.

8. Landwirtschaftliche Maschine (1) nach einem der vorhergehenden Ansprüche, wobei der Aktuator (45) ein erstes Ende (45A) aufweist, das mit der unteren Struktur (442) der absenkbaren Bodenvorrichtung (44) verbunden ist, und ein zweites Ende (45B), das entgegengesetzt zum ersten Ende (45A) mit dem Rahmen (41) verbunden ist.

9. Landwirtschaftliche Maschine (1) nach einem der vorhergehenden Ansprüche, wobei die landwirtschaftliche Maschine (1) eine Ballenpresse ist, die mit einem Traktor verbindbar ist, um Ballen bereitzustellen, wobei die Ballenpresse eine Presskammer einschließt, die den Sammelbehälter (2) definiert.

10. Landwirtschaftliche Maschine (1) nach Anspruch 9, wobei die Presskammer einen ersten Teil (21) einschließt, um eine erste Menge von Erntegut unterzubringen, und einen zweiten Teil (22), um eine zweite Menge von Erntegut unterzubringen, wobei das Zuführungssystem (4) zwischen einer ersten Auslegung und einer zweiten Auslegung bewegbar ist, wobei der Zuführungskanal (42) in der ersten Auslegung des Zuführungssystems (4) eine erste Ausrichtung aufweist, sodass der Auslass (42B) des Zuführungskanals (42) zu dem ersten Teil (21) der Presskammer hin geöffnet ist, und der Zuführungskanal (42) in der zweiten Auslegung des Zuführungssystems (4) eine zweite Ausrichtung aufweist, die sich von der ersten Ausrichtung unterscheidet, sodass der Auslass (42B) des Zuführungskanals (42) zu dem zweiten Teil (22) der Presskammer hin geöffnet ist.

11. Verfahren zum Bedienen einer landwirtschaftlichen Maschine, umfassend:
- einen Arbeitsschritt, einschließend:
Aufnehmen von Erntegut von einem Feld durch eine Aufnahmevorrichtung (3),
Vorschieben des Ernteguts durch einen Zuführungskanal (42) von der Aufnahmevorrichtung (3) zu einem Sammelbehälter (2),
Schneiden des durch den Zuführungskanal (42) vorgeschobenen Ernteguts durch eine Vielzahl von Messern (43), die auf einer absenkbaren Bodenvorrichtung (44) montiert sind, zumindest teilweise definierend eine Unterseite des Zuführungskanals (42),
wobei die absenkbare Bodenvorrichtung (44) eine obere Struktur (441) einschließt, die dem Zuführungskanal (42) zugewandt ist, und eine untere Struktur (442), wobei die Vielzahl von Messern (43) auf der unteren Struktur (442) montiert ist;
- einen Serviceschritt, einschließend das Bewegen der unteren Struktur (442) in Bezug auf einen Rahmen (41) von einer angehobenen Position, in der die Vielzahl von Messern (43) mit der oberen Struktur (441) im Eingriff ist, um in den Zuführungskanal (42) durch Öffnungen der oberen Struktur (441) hineinzuragen, um das Erntegut zu schneiden, zu einer abgesenkten Position, in der die Vielzahl von Messern (43) von der oberen Struktur (441) gelöst und beabstandet ist,
**dadurch gekennzeichnet, dass** das Bewegen der unteren Struktur (442) zwischen der angehobenen Position und der abgesenkten Position in dem Serviceschritt durch einen Aktuator (45) durchgeführt wird, der mit der unteren Struktur (442) der absenkbaren Bodenvorrichtung (44) verbunden ist, wobei der Serviceschritt das zumindest teilweise Bewegen der oberen Struktur (441) von einer Arbeitsposition zu einer Sperrposition und das entfernbare Sperren der oberen Struktur (441) in der Sperrposition am Rahmen (41) einschließt, und
wobei die untere Struktur (442) in Bezug auf den Rahmen (41) um eine Schwenkachse (P) zwischen der angehobenen Position und der abgesenkten Position geschwenkt wird, wobei die Schwenkachse (P) entlang einer Querrichtung senkrecht zu einer Vorschubrichtung der landwirtschaftlichen Maschine (1) gerichtet ist,
wobei die landwirtschaftliche Maschine (1) in einer Arbeitsauslegung, in der das Erntegut dem Sammelbehälter (2) durch den Zuführungskanal (42) zugeführt wird, und in einer Serviceauslegung, in der ein Bediener zu der Vielzahl von Messern (43) gelangt, um Instandhaltungsmaßnahmen durchzuführen, bedient wird, und
wobei
sich die untere Struktur (442) der absenkbaren Bodenvorrichtung (44) in der Arbeitsauslegung in der angehobenen Position befindet und sich die obere Struktur (441) der absenkbaren Bodenvorrichtung (44) in der Arbeitsposition befindet;
und sich die untere Struktur (442) der absenkbaren Bodenvorrichtung (44) in der Serviceauslegung in der abgesenkten Position befindet und sich die obere Struktur (441) der absenkbaren Bodenvorrichtung (44) in der Sperrposition befindet,
wobei die Sperreinrichtung (46) mit dem Rahmen (41) verbunden und mit der oberen Struktur (441) in der Sperrposition im Eingriff ist, und wobei der Rahmen (41) um eine Rotationsachse (A) drehbar ist, um die Sperreinrichtung (46) zwischen einer Ruheposition, in der die Sperreinrichtung nicht mit dem Zuführungskanal (42) interferiert, und einer aktiven Position, in der die Sperreinrichtung mit der oberen Struktur (441) in Eingriff gelangen und diese sperren kann, zu bewegen.

12. Verfahren nach Anspruch 11, wobei die Sperreinrichtung (46) mit dem Rahmen (41) verbunden und als Haken ausgeformt ist, um in der Sperrposition mit der oberen Struktur (441) in Eingriff zu gelangen.

13. Verfahren nach Anspruch 11 oder Anspruch 12, wobei die untere Struktur (442) der absenkbaren Bodenvorrichtung (44) eine Messereinheit (442A) und einen Kipphebel (442B) einschließt, wobei die Vielzahl von Messern (43) auf der Messereinheit (442A) montiert ist.

14. Verfahren nach Anspruch 13, wobei sich der Kipphebel (442B) in Bezug auf die Messereinheit (442A) bewegt.

15. Verfahren nach Anspruch 13 oder Anspruch 14, wobei der Aktuator (45) mit dem Kipphebel (442B) in einem Aktuatorverbindungspunkt (C1) verbunden ist, und wobei der Serviceschritt das Bewegen des Kipphebels (442B) von einer ersten Position zu einer zweiten Position einschließt, sodass der Aktuatorverbindungspunkt (C1) gemäß einem vordefinierten Weg auf synchronisierte Weise mit dem Bewegen der unteren Struktur (442) zwischen der angehobenen Position und der abgesenkten Position bewegt wird.

## Revendications

1. Machine agricole (1), comprenant :
- un récepteur (2), configuré pour recevoir des récoltes ;
- un dispositif de ramassage (3), configuré pour ramasser les récoltes d'un champ ;
- un système d'alimentation (4), incluant un châssis (41) ;
un canal d'alimentation (42), ayant une entrée (42A), pour recevoir les récoltes du dispositif de ramassage (3), et une sortie (42B), ouverte vers le récepteur (2) pour alimenter les récoltes vers le récepteur (2) ;
une pluralité de couteaux (43), configurés pour couper les récoltes avançant à travers le canal d'alimentation (42),
un dispositif de fond escamotable (44), qui est relié au châssis (41) pour définir au moins partiellement un côté de fond du canal d'alimentation (42) et inclut une structure supérieure (441), faisant face au canal d'alimentation (42) et comportant des ouvertures, et une structure inférieure (442), la pluralité de couteaux (43) étant montée sur la structure inférieure (442), dans laquelle la structure inférieure est mobile par rapport au châssis (41) entre une position relevée, dans laquelle la pluralité de couteaux (43) s'engage avec la structure supérieure (441) pour faire saillie dans le canal d'alimentation (43) à travers les ouvertures de la structure supérieure (441) pour couper les récoltes, et une position abaissée, dans laquelle la pluralité de couteaux (43) est désengagée et espacée de la structure supérieure (441),
dans laquelle le système d'alimentation (4) inclut un actionneur (45) relié à la structure inférieure (442) du dispositif de fond escamotable (44), pour déplacer la structure inférieure (442) entre la position relevée et la position abaissée,
et dans laquelle la structure supérieure (441) est au moins partiellement mobile par rapport au châssis entre une position de verrouillage et une position de travail, dans laquelle le système d'alimentation (4) inclut un casier (46), configuré pour verrouiller de manière amovible la structure supérieure (441) au châssis (41), dans la position de verrouillage de la structure supérieure (441),
dans laquelle la structure inférieure (442) peut pivoter par rapport au châssis (41) autour d'un axe de pivotement (P), entre la position relevée et la position abaissée, l'axe de pivotement (P) étant dirigé le long d'une direction transversale, perpendiculaire à une direction d'avancement de la machine agricole (1),
dans laquelle la machine agricole (1) peut fonctionner dans une configuration de travail, pour alimenter les récoltes vers le récepteur (2) à travers le canal d'alimentation (42), et dans une configuration de service, pour permettre à un opérateur d'avoir accès à la pluralité de couteaux (43) pour effectuer la maintenance, dans laquelle, dans la configuration de travail :
- la structure inférieure (442) du dispositif de fond escamotable (44) est dans la position relevée,
- la structure supérieure (441) du dispositif de fond escamotable (44) est dans la position de travail ;
et, dans la configuration de service :
- la structure inférieure (442) du dispositif de fond escamotable (44) est dans la position abaissée,
- la structure supérieure (441) du dispositif de fond escamotable (44) est dans la position de verrouillage,
la machine agricole (1) étant **caractérisée en ce que** le casier (46) est relié au châssis (41) et est configuré pour être engagé avec la structure supérieure (441) dans la position de verrouillage, et dans laquelle le châssis (41) peut tourner autour d'un axe de rotation (A) pour déplacer le casier (46) entre une position de repos, dans laquelle le casier n'interfère pas avec le canal d'alimentation (42), et une position active, dans laquelle le casier peut s'engager dans et verrouiller la structure supérieure (441).

2. Machine agricole (1) selon la revendication 1, dans laquelle le casier (46) a la forme d'un crochet.

3. Machine agricole (1) selon la revendication 1 ou 2, dans laquelle la structure inférieure (442) du dispositif de fond escamotable (44) inclut une unité de couteaux (442A) et une bascule (442B), ladite pluralité de couteaux (43) étant montée sur l'unité de couteaux (442A), dans laquelle la bascule (442B) est mobile par rapport à l'unité de couteaux (442A).

4. Machine agricole (1) selon la revendication 3, dans laquelle l'actionneur (45) est relié à ladite bascule (442B) en un point de connexion d'actionneur (C1).

5. Machine agricole (1) selon la revendication 4, dans laquelle la bascule (442B) est mobile entre une première position et une seconde position, pour déplacer le point de connexion d'actionneur (C1) par rapport à l'unité de couteaux (442A).

6. Machine agricole (1) selon la revendication 5, dans laquelle l'actionneur (45) est configuré pour déplacer la bascule (442B) entre la première position et la seconde position de manière synchronisée avec le déplacement de la structure inférieure (442) entre la position relevée et la position abaissée.

7. Machine agricole (1) selon l'une quelconque des revendications précédentes 3 à 6, dans laquelle, dans la configuration de travail de la machine agricole (1) :
- la structure inférieure (442) du dispositif de fond escamotable (44) est dans la position relevée,
- la bascule (442B) est dans la première position,
et, dans la configuration de service de la machine agricole (1) :
- la structure inférieure (442) du dispositif de fond escamotable (44) est dans la position abaissée,
- la bascule (442B) est dans la seconde position,
dans laquelle l'actionneur (45) est relié à ladite bascule (442B) en un point de connexion d'actionneur (C1), et dans lequel, dans la seconde position de la bascule (442B), le point de connexion d'actionneur (C1) est à une plus grande distance de l'unité de couteaux (442A) que dans la première position de la bascule (442B).

8. Machine agricole (1) selon l'une quelconque des revendications précédentes, dans laquelle l'actionneur (45) a une première extrémité (45A), reliée à la structure inférieure (442) du dispositif de fond escamotable (44), et une seconde extrémité (45B), opposée à la première extrémité (45A), reliée au châssis (41).

9. Machine agricole (1) selon l'une quelconque des revendications précédentes, ladite machine agricole (1) étant une presse à balles pouvant être reliée à un tracteur pour fournir des balles, dans laquelle la presse à balles inclut une chambre de mise en balles définissant ledit récepteur (2).

10. Machine agricole (1) selon la revendication 9, dans laquelle la chambre de mise en balles inclut une première partie (21), pour loger une première quantité de récoltes, et une seconde partie (22), pour loger une seconde quantité de récoltes, dans laquelle le système d'alimentation (4) est mobile entre une première configuration et une seconde configuration, dans laquelle, dans la première configuration du système d'alimentation (4), le canal d'alimentation (42) a une première orientation de sorte que la sortie (42B) du canal d'alimentation (42) est ouverte vers la première partie (21) de la chambre de mise en balles, et, dans la seconde configuration du système d'alimentation (4), le canal d'alimentation (42) a une seconde orientation différente de la première orientation, de sorte que la sortie (42B) du canal d'alimentation (42) est ouverte vers la seconde partie (22) de la chambre de mise en balles.

11. Procédé pour faire fonctionner une machine agricole, comprenant :
- une étape de travail, incluant :
ramasser des récoltes d'un champ, à travers un dispositif de ramassage (3),
faire avancer les récoltes, à travers un canal d'alimentation (42), du dispositif de ramassage (3) à un récepteur (2),
couper les récoltes avançant à travers le canal d'alimentation (42), à travers une pluralité de couteaux (43) montés sur un dispositif de fond escamotable (44), définissant au moins partiellement un côté de fond du canal d'alimentation (42),
dans lequel le dispositif de fond escamotable (44) inclut une structure supérieure (441) tournée vers le canal d'alimentation (42) et une structure inférieure (442), dans lequel ladite pluralité de couteaux (43) est montée sur la structure inférieure (442) ;
- une étape de service, incluant déplacer la structure inférieure (442) par rapport à un châssis (41) d'une position relevée, dans laquelle la pluralité de couteaux (43) s'engage avec la structure supérieure (441) pour faire saillie dans le canal d'alimentation (42) à travers des ouvertures de la structure supérieure (441) pour couper les récoltes, vers une position abaissée, dans laquelle la pluralité de couteaux (43) est désengagée et espacée de la structure supérieure (441),
**caractérisé en ce que**, dans l'étape de service, le déplacement de la structure inférieure (442) entre la position relevée et la position abaissée est effectué par l'intermédiaire d'un actionneur (45) relié à la structure inférieure (442) du dispositif de fond escamotable (44), dans lequel l'étape de service inclut déplacer au moins partiellement la structure supérieure (441) d'une position de travail à une position de verrouillage et verrouiller de manière amovible au châssis (41) la structure supérieure (441) dans la position de verrouillage, et
dans lequel la structure inférieure (442) est pivotée par rapport au châssis (41) autour d'un axe de pivotement (P), entre la position relevée et la position abaissée, l'axe de pivotement (P) étant dirigé le long d'une direction transversale, perpendiculaire à une direction d'avancement de la machine agricole (1),
dans lequel la machine agricole (1) est opérée dans une configuration de travail, dans laquelle les récoltes sont alimentées vers le récepteur (2) à travers le canal d'alimentation (42), et dans une configuration de service, dans laquelle un opérateur a accès à la pluralité de couteaux (43) pour effectuer la maintenance, et
dans lequel,
dans la configuration de travail, la structure inférieure (442) du dispositif de fond escamotable (44) est dans la position relevée et la structure supérieure (441) du dispositif de fond escamotable (44) est dans la position de travail ;
et, dans la configuration de service, la structure inférieure (442) du dispositif de fond escamotable (44) est dans la position abaissée, et la structure supérieure (441) du dispositif de fond escamotable (44) est dans la position de verrouillage,
dans lequel le casier (46) est relié au châssis (41) et est engagé avec la structure supérieure (441) dans la position de verrouillage, et dans lequel le châssis (41) peut tourner autour d'un axe de rotation (A) pour déplacer le casier (46) entre une position de repos, dans laquelle le casier n'interfère pas avec le canal d'alimentation (42), et une position active, dans laquelle le casier peut s'engager dans et verrouiller la structure supérieure (441).

12. Procédé selon la revendication 11, dans lequel le casier (46) est relié au châssis (41) et a la forme d'un crochet pour s'engager avec la structure supérieure (441) dans la position de verrouillage.

13. Procédé selon la revendication 11 ou la revendication 12, dans lequel la structure inférieure (442) du dispositif de fond escamotable (44) inclut une unité de couteaux (442A) et une bascule (442B), dans lequel ladite pluralité de couteaux (43) est montée sur l'unité de couteaux (442A).

14. Procédé selon la revendication 13, dans lequel la bascule (442B) se déplace par rapport à l'unité de couteaux (442A).

15. Procédé selon la revendication 13 ou la revendication 14, dans lequel l'actionneur (45) est relié à la bascule (442B) en un point de connexion d'actionneur (C1), et dans lequel l'étape de service inclut déplacer la bascule (442B) d'une première position à une seconde position, de manière à déplacer le point de connexion d'actionneur (C1) selon un trajet prédéfini, de manière synchronisée avec le déplacement de la structure inférieure (442) entre la position relevée et la position abaissée.
